# EUROPEAN PATENT APPLICATION

(11) **EP 4 830 958 A1**
(43) Date of publication of application: **28.10.2026**
(21) Application number: 25171643.7
(22) Date of filing: 22.04.2025
(51) Int. Cl.: B60K 1/00, B60K 17/28

(54) **SYSTEM AND METHOD FOR ENERGY DISSIPATION**

(71) Applicant: Volvo Truck Corporation, 405 08 Göteborg (SE)
(72) Inventor: AUDHAV, Tove, 438 34 Landvetter (SE); BLOM, Oskar, 438 38 Landvetter (SE); HALL, Sebastian, 413 17 Göteborg (SE)
(74) Representative: Valea AB

(57) **Abstract**

The disclosure relates to an energy dissipation system (10) for an electrically driven vehicle (1), the system (10) comprising a mechanical power takeoff (11) , PTO, an energy dissipation device (12), an electrical motor (13) and a gear arrangement (14), wherein both the mechanical PTO (11) and the energy dissipation device (12) are configured to be driven by the electrical motor (13) via the gear arrangement (14). The disclosure also relates to a method for dissipating energy.

## Description

### TECHNICAL FIELD

The disclosure relates generally to dissipation of energy in electrically driven vehicles, such as fully electric vehicles or hybrid vehicles. The disclosure may be particularly useful when employing regenerative braking. In particular aspects, the disclosure relates to an energy-dissipation system for an electrically driven vehicle. The disclosure can be applied to heavy-duty vehicles, such as trucks, buses, and construction equipment, among other vehicle types. In particular, the disclosure can be applied to a vehicle with an electrically driven mechanical power takeoff. Although the disclosure may be described with respect to a particular vehicle, the disclosure is not restricted to any particular vehicle.

### BACKGROUND

Electric and hybrid vehicles commonly make use of regenerative braking to recover energy during braking which is otherwise lost. Regenerative braking is achieved by operating the electric machine(s) of the vehicle as a generator thereby applying a negative torque (a braking torque) to the drive axle(s). Besides recovering energy which can be used to charge a battery of the vehicle, regenerative braking also decreases the need to use service brakes, such as disc brakes of the vehicle. For example, during long downhill drives, overuse and thus overheating of the service brakes can be mitigated using regenerative braking.

Challenges occur, however, when the battery is already charged to a maximum or the recovered energy cannot be completely stored in the battery for some other reason. Hence, there is a need for improved systems for efficiently dissipating energy.

### SUMMARY

According to a first aspect of the disclosure, there is provided an energy dissipation system for an electrically driven vehicle, the system comprising a mechanical power takeoff, PTO, an energy dissipation device, an electrical motor and a gear arrangement, wherein both the mechanical PTO and the energy dissipation device are configured to be driven by the electrical motor via the gear arrangement.
The first aspect of the disclosure may seek to provide an improved system for dissipating excess energy, such as surplus energy generated by regenerative braking or surplus energy generated by any subcomponent of the vehicle, such as a fuel cell system. The term energy used herein may refer to an amount of energy over a time period or an amount of energy per unit time, i.e. a power. The excess energy may correspond to a desired braking torque. The first aspect of the disclosure may make use of the components of a mechanical power takeoff, in particular an electrical motor and a gear arrangement, to also drive an energy dissipation device. In some non-limiting examples, the energy dissipation device may be a fluid compressor, such as an air compressor or a pump. However, other means for dissipating energy, such as any device converting rotational device to heat through friction, for example using a brake, may be conceivable. In some examples, the PTO may be a cement mixer, i.e. a receptacle filled with cement rotating at a rotational speed, thereby keeping the cement in a flowable state. However, other functions of the PTO are conceivable as, for example, auxiliary functions such as an auxiliary pump or a compressor of a cooling system. A technical benefit of the first aspect may include a simple and cost-efficient construction due to few additional components. In particular, no dedicated electrical motor and/or gear arrangement may be necessary for driving the dissipation device.

Optionally, the gear arrangement has an input shaft connected to the electrical motor, a first output shaft drivingly connected or connectable to the PTO and a second output shaft drivingly connected or connectable to the energy dissipation device.
A technical benefit may include that the PTO and the electrical motor may be driven by the electrical motor, i.e. no additional motor for the energy dissipation device may be necessary.

Optionally, the PTO and/or the energy dissipation device are selectively connectable to the respective output shafts of the gear arrangement using respective clutches. A technical effect may include facilitated control of the PTO and/or the energy dissipation device, e.g. by drivingly connecting or disconnecting the PTO and/or the energy dissipation device to the gear arrangement and thereby to the electrical motor.

Optionally, a first gear ratio defined as a ratio between the rotational speed of the first output shaft and the rotational speed of the input shaft is smaller than a second gear ratio defined as a ratio between the rotational speed of the second output shaft and the rotational speed of the input shaft.
A technical benefit may include an efficient energy dissipation by the energy dissipation device, i.e. at rotational speeds that give appropriately efficient energy dissipation. At the same time, it may be ensured that the PTO is operated at rotational speeds appropriate for the intended task of the PTO.

Optionally, the system further comprises a control device, the control device being configured to:
- obtain a PTO operational target value indicating a desired PTO operating point;
- obtain an energy dissipation target value indicating a desired amount of energy to be dissipated, wherein the energy to be dissipated is at least a portion of an excess energy of the vehicle; and
- control the electrical motor in dependence of the PTO operational target value;
- and, if the energy dissipation target value is above a threshold, connect the energy dissipation device to the gear arrangement.
The PTO operational target value may indicate a desired operating point of the PTO, such as a desired rotational speed of the PTO, a desired power applied to the PTO or a desired torque applied at the PTO. The PTO operational target value may be obtained from an operator via an input interface or by a higher-level control system of the vehicle.
A technical benefit may include improved control of the energy dissipation in the energy dissipation device and/or the PTO. In particular, it is ensured that energy dissipation is only performed when there is a need for energy dissipation indicated by the energy dissipation target value, i.e. when the energy dissipation target value is above a threshold. In some examples, the threshold may depend on how much energy the PTO can dissipate and/or how much energy an energy storage of the vehicle may take up. In other examples, the threshold may be set to zero, such that the energy dissipation device is coupled to the energy dissipation device when the energy dissipation target value is non-zero.
The energy dissipation target value may be obtained from a higher-level control system, such as a battery control system or a cruise control system. Alternatively, the energy dissipation target value may be calculated or preprogrammed in the control device. The energy dissipation target value may correspond to an excess energy of the vehicle. In some examples, the excess energy may correspond to a braking torque which is currently desired. The excess energy and the energy dissipation target value may be dependent on a cruise control strategy, in particular based on characteristics of the road ahead such as inclinations and/or declines. Further, the excess energy and the energy dissipation target value may be dependent on a state of charge of an electric energy storage of the vehicle. Still further, the excess energy and the energy dissipation target value may be dependent on a current or future (predicted) capability of the energy storage of the vehicle to store energy and/or a current or future energy production of a fuel cell system of the vehicle.

Optionally, the control device is further configured to:
- obtain or determine a PTO operational tolerance interval, the PTO operational tolerance interval comprising a lower PTO operational limit and an upper PTO operational limit; and
- control the electrical motor in dependence of the PTO operational tolerance interval and the energy dissipation target value such that the energy dissipated in the energy dissipation device and the PTO is controlled at least towards the energy dissipation target value, while the PTO is held within the PTO operational tolerance interval.
The PTO operational tolerance interval may herein be an indication of an interval of operating points within which the PTO may be operated while performing its intended operation. For example, the PTO operational tolerance interval may be specified in terms of a rotational speed of the PTO, of a power applied to the PTO or a torque applied at the PTO. The PTO operational interval may comprise a lower and an upper limit. For example, if the PTO operational tolerance interval is defined in terms of rotational speed, the lower PTO operational limit may be a minimum PTO rotational speed and the upper PTO operational limit may be a maximum PTO rotational speed. Since the PTO and the energy dissipation device are driven via the same gear arrangement, the rotational speeds of the PTO and the energy dissipation device may be proportional to each other. By allowing the PTO to be operated within the PTO operational tolerance interval, the amount of energy dissipated in the energy dissipation device may be controlled to, or at least towards, the energy dissipation target value. In other words, when the energy dissipation target value can be met by controlling the electric motor to a speed which results in an operating point of the PTO within the PTO operational tolerance interval, the amount of energy dissipation can be controlled to the energy dissipation target value. If, however, the energy dissipation target value cannot be met by controlling the electric motor to a speed which results in an operating point of the PTO within the PTO operational tolerance interval, the amount of energy dissipation can be controlled towards the energy dissipation target value, e.g. by controlling the PTO to the upper or lower operational limit of the PTO operational tolerance interval. Hence, a technical effect may include a flexible control of the amount of dissipated energy.

Optionally, the energy dissipation device comprises a regulator for further adjusting the energy dissipated in the energy dissipation device, wherein the control device is further configured to:
- control the regulator based on the energy dissipation target value.
A technical benefit may include improved control of the amount of energy dissipated. Hence, the amount of dissipated energy may be controlled to, or at least closer towards, the energy dissipation target value.

Optionally, the control device is further configured to:
- obtain an indication that the PTO can be driven intermittently;
- during intermittent time periods, control the PTO to be disconnected from the gear arrangement and control the electrical motor based on the energy dissipation target value.
By disconnecting the PTO from the gear arrangement intermittently during certain time periods, the rotational speed of the electrical motor and thus the energy dissipation device may, during these time periods, be controlled more flexibly towards or to the energy dissipation target value, since there are no or fewer constraints on the rotational speed of the electrical motor. Hence, a technical benefit may include an improved control of the amount of energy dissipation during intermittent time periods, thereby better meeting the energy dissipation target value.

Optionally, the control device is further configured to:
- obtain an indication to turn off the PTO;
- control the PTO to be disconnected from the gear arrangement and control the electrical motor based on the energy dissipation target value.
When it is indicated that the PTO operation is not needed, the PTO can be turned off entirely and disconnected from the gear arrangement. Hence, the electrical motor can be controlled based on the energy dissipation value only. A technical benefit may include an improved control of the of the amount of energy dissipation.

Optionally, the control device is further configured
- to control an energy storage system to provide at least a fraction of the energy required to drive the electrical motor and/or
- to control the energy storage system to be charged by at least a fraction of said excess energy.
The energy storage system may comprise an energy storage, such as a battery, a fuel cell or any other means for storing electrical energy. The energy storage system may also comprise a control device for controlling the flow of energy to or from the energy storage. A technical benefit may include further improved control of the amount of dissipated energy towards the energy dissipation target value while meeting the constraints of the PTO operational value or PTO operational tolerance interval. In particular, if the energy dissipation target value cannot be met due to constraints of the PTO and/or the energy dissipation device, energy can be added to or taken from the energy storage, if it is determined that such an energy addition or removal is tolerable by the energy storage.

Optionally, the energy dissipation device is a fluid compressor.
A technical benefit may be a cost-efficient energy dissipation device which is easy to integrate in the vehicle due to its relatively small size.

Optionally, the regulator is a throttle or an orifice diameter regulator of the fluid compressor, adapted to restrict the fluid flow rate through the compressor.
A technical benefit may include facilitated control of the dissipated energy.

According to a second aspect of the disclosure, there is provided a method for controlling an energy dissipation system according to the first aspect performed by a control device, the method comprising:
- obtaining a PTO operational target value indicating a desired PTO operating point;
- obtaining an energy dissipation target value indicating a desired amount of energy to be dissipated in the energy dissipation device, wherein the energy to be dissipated is at least a portion of an excess energy of the vehicle; and
- controlling the electrical motor in dependence of the PTO operational target value;
- and, if the energy dissipation target value is above a threshold, connecting the energy dissipation device to the gear arrangement.
Advantages and advantageous features of the method according to the second aspect are largely analogous to advantages and advantageous features of the energy dissipation system according to the first aspect.

Optionally, the method further comprises:
- obtaining or determining a PTO operational tolerance interval, the PTO operational tolerance interval comprising a lower PTO operational limit and an upper PTO operational limit; and
- controlling the electrical motor in dependence of the PTO operational tolerance interval and the energy dissipation target value such that the energy dissipated in the energy dissipation device and the PTO is controlled at least towards the energy dissipation target value, while the PTO is held within the PTO operational tolerance interval.

Optionally, the energy dissipation device comprises a regulator for further adjusting the energy dissipated in the energy dissipation device, the method further comprising:
- controlling the regulator based on the energy dissipation target value.

Optionally, the method further comprises:
- obtaining an indication that the PTO can be driven intermittently;
- during intermittent time periods, controlling the PTO to be disconnected from the gear arrangement and controlling the electrical motor based on the energy dissipation target value.

Optionally, the method further comprises:
- obtaining a request to turn off the PTO;
- controlling the PTO to be disconnected from the gear arrangement and controlling the electrical motor based on the energy dissipation target value.

Optionally, the method further comprises:
- controlling an energy storage to provide at least a fraction of the energy required to drive the electrical motor.

Optionally, the energy dissipation device is a fluid compressor.

Optionally, the regulator is a throttle or an orifice diameter regulator of the fluid compressor, adapted to restrict the fluid flow rate through the compressor.

According to a third aspect of the disclosure, there is provided a vehicle comprising the energy dissipation system according to the first aspect.
Advantages and advantageous features of the vehicle according to the third aspect are largely analogous to advantages and advantageous features of the energy dissipation system according to the first aspect.

According to a fourth aspect of the disclosure, there is provided a computer program product comprising program code for performing, when executed by processing circuitry, the method according to the second aspect.
Advantages and advantageous features of the computer program product according to the fourth aspect are largely analogous to advantages and advantageous features of the energy dissipation system according to the first aspect.

According to a fifth aspect of the disclosure, a non-transitory computer-readable storage medium comprising instructions, which when executed by the processing circuitry, causes the processing circuitry to perform the method according to the second aspect. Advantages and advantageous features of the non-transistory computer-readable storage medium according to the fifth aspect are largely analogous to advantages and advantageous features of the energy dissipation system according to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** schematically illustrates a vehicle according to an example.
**Fig. 2** schematically illustrates an energy dissipation system according to an example.
**Fig. 3** schematically illustrates an energy dissipation system according to another example.
**Fig. 4** schematically illustrates an energy dissipation system according to another example.
**Fig. 5** schematically illustrates an energy dissipation system according to another example.
**Fig. 6** is a flow-chart of a method for dissipating energy according to an example.

### DETAILED DESCRIPTION

The detailed description set forth below provides information and examples of the disclosed technology with sufficient detail to enable those skilled in the art to practice the disclosure.

An aim of the present disclosure is to alleviate at least one drawback of the prior art, or at least to provide a suitable alternative. In particular, an aim of the present disclosure may be to provide an improved energy dissipation system for an electric vehicle and a method for controlling such a system. Further, an aim of the present disclosure may be to provide an energy dissipation system with few additional components. In particular, the present disclosure is based on the insight that vehicles already having an electrically driven PTO may be complemented by an energy dissipation device driven by the same components as the PTO. Still further, an aim of the present disclosure may be to provide an efficient control device and control method for such a system. In particular, an aim of such a control device and method may be to meet or at least balance the demands of the PTO and, at the same, providing appropriate energy dissipation.

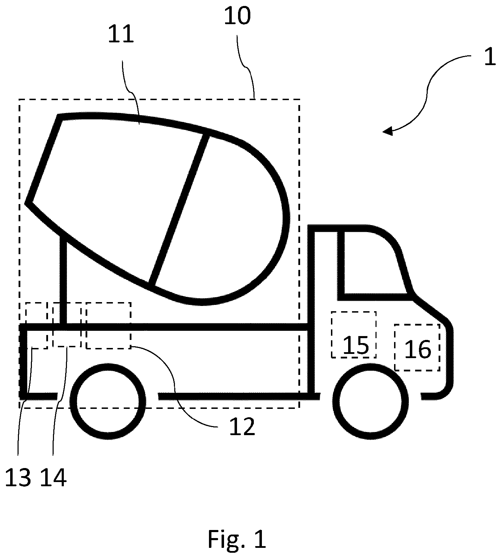

**Fig. 1** is an exemplary illustrative view of a vehicle **1** according to an example. The vehicle **1** may be an electrically driven vehicle **1,** such as a full-electric vehicle or a hybrid vehicle. The vehicle **1** may comprise at least one energy storage system **15,** such as a battery and/or a fuel cell system. The vehicle **1** may comprise an energy dissipation system **10.** In particular, the system **10** may be used to dissipate excess energy, i.e. energy generated by at least one electric propulsion machine **16** of the vehicle **1** during regenerative braking or generated by a subcomponent of the vehicle, such as a fuel cell system. Excess energy may occur when the energy storage system **15** is not capable of storing all the energy generated by the vehicle **1** or when it is not desired to charge the energy storage system **15** with all the energy generated by the vehicle **1** or when there is a desired to discharge the energy storage, e.g. if it is determined that a lower state of charge (SOC) of the energy storage is beneficial. For example, the energy storage **16** may be fully charged which prevents further charging or the electric propulsion machine(s) **16** generate more power than what can be taken up by the energy storage system **15.** It may also be determined depending on the operational state of the vehicle and/or the energy storage system **15** that charging is not desired, e.g. for achieving higher durability of the energy storage system **15** or for avoiding overheating of the energy storage system **15.** In some examples, there may be a desire to dissipate energy proactively, e.g. when the energy storage system **15** is charged and the vehicle **1** is expected to drive on a downhill slope. The energy dissipation system **10** may comprise a mechanical power takeoff (PTO) **11,** an energy dissipation device **12,** an electric motor **13** and a gear arrangement **14.**

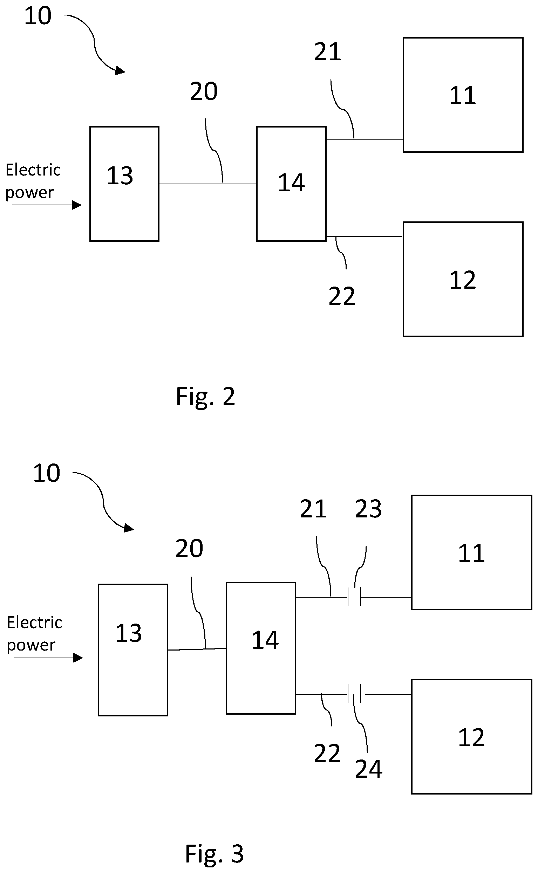

The energy dissipation system **10** according to an example is further illustrated in **Fig. 2****.** The mechanical PTO **11** of the energy dissipation system **10** may be a device for providing rotational power to an auxiliary function of the vehicle **1.** For example, the mechanical PTO **11** may be configured to drive a cement mixer or an auxiliary pump. The energy dissipation device **12** may be any device capable of dissipating rotational energy. The energy dissipation device **12** may be a fluid compressor, such as an air compressor or a pump. Both the mechanical PTO **11** and the energy dissipation device **12** may be drivingly connected or connectable to the electrical motor **13** via the gear arrangement **14.** For this purpose, an input shaft **20** is arranged between the electric motor **13** and the gear arrangement **14.** Further, a first output shaft **21** is arranged between the gear arrangement **14** and the PTO **11** and a second output shaft **22** is arranged between the gear arrangement **14** and the energy dissipation device **12.** The electric motor **13** is different from the electric propulsion machine(s) **16** of the vehicle **1.** The electric motor **13** may be supplied with electric power from the electric propulsion machine(s) **16** and/or the energy storage system **15** of the vehicle **1** and/or other subcomponents, in particular a fuel cell system. Hence, both the PTO **11** and the energy dissipation device **12** may be driven or drivable by the same electric motor **13.** Thereby, additional components, such as a dedicated motor and/or a gear arrangement for the energy dissipation device **12,** may be obviated.

The gear arrangement **14** may comprise gearings that provide different gear ratios for the PTO **11** and the energy dissipation device **12.** A first gear ratio may be defined as the ratio between a rotational speed of the first output shaft **21** to a rotational speed of the input shaft **20,** when these are drivingly connected. A second gear ratio may be defined as the ratio between a rotational speed of the second output shaft **22** to a rotational speed of the input shaft **20,** when these are drivingly connected. In some examples, the first gear ratio may be smaller than the second gear ratio, since the PTO **11** may require comparably small rotational speeds, such as between 5-10 rpm for a cement mixer, or 800-1200 rpm for an auxiliary pump or the like, whereas the energy dissipation device may work optimally at larger rotational speeds, such as 40000-80000 rpm. Other PTO applications, may, however, require higher rotational speeds, such that in some examples, the first gear ratio may be greater than the second gear ratio. The first and the second gear ratio may be fixed in the gear arrangement, i.e. both the rotational speed of the first output shaft **21** and the rotational speed of the second output shaft **22** may be proportional to each other and to the rotational of the input shaft **20.** Alternatively, the gear arrangement **14** may be shiftable between different gear states, thereby providing more than one first gear ratio and/or more than one second gear ratio.

**Fig. 3** illustrates the energy dissipation system **10** according to another example. Here, a first clutch **23** is arranged between the gear arrangement **14** and the PTO **11** and a second clutch **24** is arranged between the gear arrangement **14** and the energy dissipation device **12.** Using the respective clutches **23/24,** the PTO **11** and/or the energy dissipation device **12** may be disconnected from the gear arrangement **14.** Hence, it may be possible to drive only one of the devices with the electric motor **13,** e.g. when a PTO operation is not needed or when energy dissipation is not needed. The clutches may be controlled manually or by control means of a vehicle control system, as further explained below.

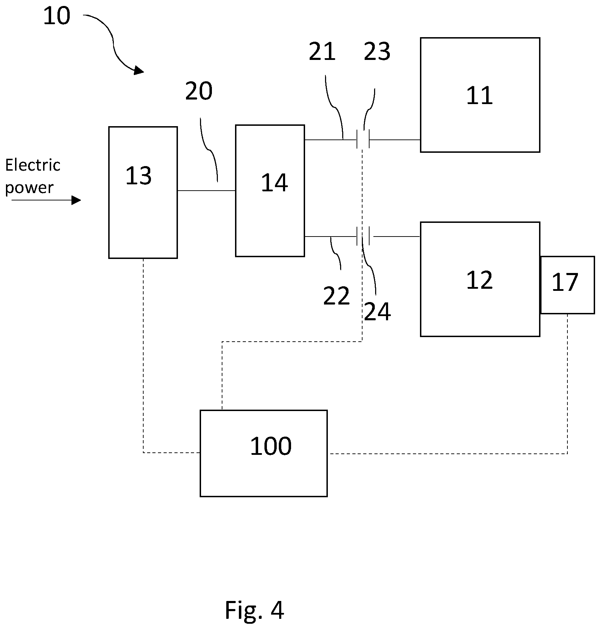

Turning now to **Fig. 4****,** an energy dissipation system **10** using a control device **100** is elaborated upon. The control device **100** may be any computer system of the vehicle **1** and may be integrated in other control systems of the vehicle **1,** such as a cruise control system or a battery control system. The control device **100** may be in communication with the electric motor **13** and at least one of the clutches **23/24.**

Optionally, in a nonlimiting example, the control device **100** may be in communication with a regulator **17** of the energy dissipation device **12.** The regulator may be arranged to further adjust the amount of energy dissipated in the energy dissipation device **12.** In one example, where the energy dissipation device **12** is an air compressor, the regulator **17** may be an orifice diameter regulator arranged downstream of the air compressor and arranged to control an orifice diameter of the air compressor, thereby controlling the air resistance of the compressor and hence the power dissipated in the compressor. Alternatively, the regulator **17** may be a throttle arranged upstream of the air compressor.

The control device **100** may be configured to obtain a PTO operational target value indicating a desired PTO operating point. The PTO operational target value may be obtained from a higher-level vehicle control system, such as a cruise control system. Alternatively or additionally, the PTO operational target value may be set or programmed by an operator, such as the driver of the vehicle **1.** The PTO operational target value may be dependent on the type of device connected to the PTO **11** and the operational needs of that device. The PTO operational target value may be in terms of rotational speed, power and/or torque. The PTO operational target value may vary over time and may be pre-programmed as a function over time.

Optionally, the control device may also obtain a PTO operational tolerance interval, the PTO operational tolerance interval comprising a lower PTO operational limit and an upper PTO operational limit. For example, when the PTO operational tolerance interval is defined in terms of rotational speed of the PTO, the lower operational limit may be a minimum PTO rotational speed and the upper operational limit may be a maximum PTO rotational speed, which the PTO may be operated at. Analogously, when the PTO operational tolerance interval is defined in terms of power applied at the PTO, the lower operational limit may be a minimum power and the upper operational limit may be a maximum power, which may be applied to the PTO. In the same way, upper and lower limits could be defined in terms of torque or other operational values. The PTO operational tolerance interval may comprise the PTO operational target value. For example, the PTO operational tolerance interval may be set relative to the PTO operational target value, such as a positive and a negative percentage of the PTO operational target value. The PTO operational tolerance interval may be indicative of a rotational speed interval, a power interval or a torque interval in which the PTO **11** may be operated, while still fulfilling its operational demands. For example, in the case of a cement mixer, it may be determined that the cement mixer may be operated between 8 and 12 rpm or 10 rpm (+/- 20%), thereby keeping the cement in a flowable state. By allowing a tolerance for the control of the PTO **11,** flexibility may be gained for the control of the energy dissipation device **12,** as will be further elaborated below.

The control device **100** may be configured to obtain an energy dissipation target value indicating a desired amount of energy to be dissipated. The energy dissipation target value may be dependent on an amount of electric energy generated by the electric propulsion machine(s) **16** of the vehicle **1.** The amount of electric energy generated by the electric propulsion machine(s) **16** may be measured instantly or predicted based on future needs for regenerative braking, e.g. based on a road gradient of the route ahead of the vehicle **1.** Further, the energy dissipation target value may be dependent on a state of the energy storage system **15** indicating how much energy can be taken up or provided by the energy storage system **15,** such as a state of charge, a maximum charging capacity in terms of electric power or energy or a thermal state of the energy storage system **15.**

Further, the control device **100** may be configured to control the electrical motor **13** in dependence of the PTO operational target value and/or the PTO operational tolerance interval. If the energy dissipation target value is above a threshold, the control device **100** may be configured to connect the energy dissipation device **12** to the gear arrangement **14.** The control device **100** may connect the energy dissipation device **12** to the gear arrangement **14** by closing the clutch **24.** The threshold may be set to zero, i.e. the energy dissipation device **12** is connected as soon as there is an energy dissipation request. Alternatively, the threshold may depend on how much energy the PTO **11** can dissipate and/or how much energy the energy storage system **15** may take up.

The control device **100** may be configured to control the electrical motor **13** in dependence of the energy dissipation target value such that the energy dissipated in the energy dissipation device **12** and the PTO **11** is controlled at least towards the energy dissipation target value, while the PTO **11** is held within the PTO operational tolerance interval. Hence, the flexibility in the PTO operational tolerance interval is used to get closer towards the energy dissipation target value. However, since the rotational speeds of the PTO **11** and the energy dissipation device **12** may depend on each other because of the fixed gear ratios, it may not always be possible to reach the energy dissipation target value while keeping the PTO **11** within the PTO operational tolerance interval. In such cases, it may be most feasible to control the electrical motor **13** to a value corresponding to a respective boundary value of the PTO operational tolerance interval, i.e. the upper or lower PTO operational limit, in order to get as close as possible towards the energy dissipation target value.

Additionally or alternatively to the above, the control device **100** may also be configured to control the regulator **17** to further adjust the energy dissipated in the energy dissipation device **12** towards the energy dissipation target value.

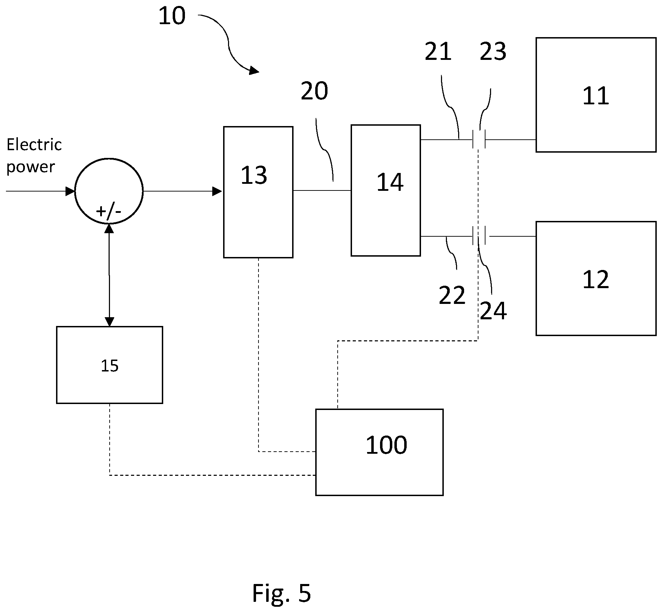

Another example of an energy dissipation system **10** of the present disclosure is illustrated in **Fig. 5****.** Here, the control device **100** is in communication with the energy storage system **15** or a control system of the energy storage system **15.** The control device **100** may be configured to control the flow of electric energy towards the energy storage system **15,** e.g. for charging the energy storage system **15,** or from the energy storage system **15** to the electric motor **13.** Thereby, the control device **100** can further adjust the amount of excess energy to be handled by the system 10. For example, the control device **100** may control the energy storage system **15** to provide at least a fraction of the energy required to drive the electrical motor **13.** Thereby, additional energy may be provided to the electrical motor **13** from the energy storage system **15.** Hence, a better control of the PTO **11** towards the PTO operational target value or the PTO operational tolerance interval may be achieved, while at the same time meeting the energy dissipation target value.

Alternatively, the control device **100** may control the energy storage system **15** to be charged by at least a fraction of the excess energy. Thereby, not all excess energy is provided to the electrical motor 13, i.e. not all excess energy is dissipated. Hence, further control towards the energy dissipation target value may be facilitated.

Further, the PTO **11** may be driven intermittently. When the operation of the PTO **11,** for example as a cement mixer, allows intermittent operation, e.g. when the PTO **11** is allowed to stand still or rotate by its own inertia for certain time periods while still performing its intended tasks, the control device **100** may control the PTO **11** to be disconnected during intermittent time periods. The electric motor **13** may then be controlled based on the energy dissipation target value without consideration of the PTO **11.**

Further, in some situations it may be decided that the PTO operation is not needed at all. Again, the PTO **11** may be decoupled and the electric motor **13** may be controlled based on the energy dissipation target value.

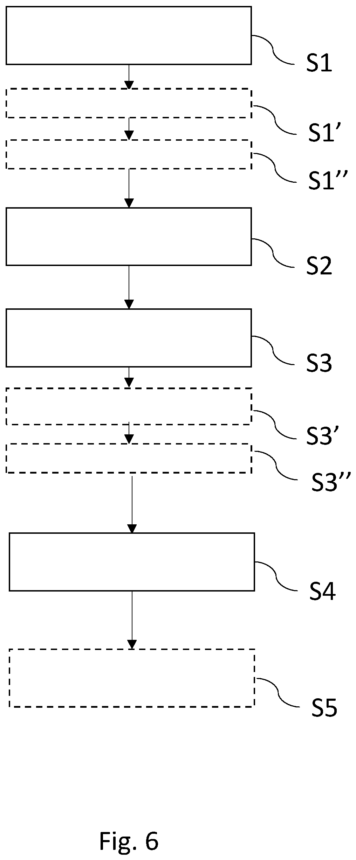

A method for controlling an energy dissipation system **10** is exemplified and explained with respect to **Fig. 6****.** The method may be computer-implemented and carried out by processing circuity of a control device **100.** The flow chart in **Fig. 6** shows a number of actions that may be taken according to examples. Optional actions are marked by dashed lines.

**Action S1:** obtaining a PTO operational target value indicating a desired PTO operating point.

The PTO operational target value indicates a desired operating point of the PTO **11,** such as a desired rotational speed of the PTO, a power applied at the PTO or a torque applied at the PTO. The PTO operational target value may be obtained from another control system of the vehicle **1** or be determined or pre-programmed in the control device **100.** Alternatively, the PTO operational target value may be set by an operator through an input device, such as an input device of the vehicle **1** or an external device such as a mobile phone or the like.

**Action S2:** obtaining an energy dissipation target value indicating a desired amount of energy to be dissipated.

An energy dissipation target value may indicate the quantity of energy to be dissipated in the energy dissipation device **12** and/or the PTO **11.** The energy to be dissipated may be at least a portion of an excess energy of the vehicle **1.** The excess energy may be an energy or a power that is or has been generated by the vehicle **1,** e.g. by the propulsion machines **16** during regenerative braking, or by another sub-component of the vehicle **1** such as a fuel cell system. In some examples, the term excess energy may refer to energy stored in the energy storage system **15** which is desired to be discharged due to an future demand to take up energy, e.g. due to a downhill slope ahead of the vehicle **1.** In some examples, the excess energy may be equal to the energy to be dissipated.

The energy dissipation target value may be determined by the control device **100** or any other control system of the vehicle, such as a braking control system or a cruise control system. The energy dissipation target value may indicate a current amount of energy to be dissipated or a predicted amount of energy to be dissipated, e.g. based on a road gradient of the route ahead of the vehicle **1.**

**Action S3:** controlling the electrical motor **13** in dependence of the PTO operational target value.

When the PTO is operational, the electrical motor **13** may have to be controlled in dependence of the PTO operational target value. When there is a possibility to operate the PTO in a PTO operational tolerance interval or when it is possible to switch off the PTO, a more flexible control of the electrical motor **13** towards the energy dissipation target value may be possible.

**Action S4:** if the energy dissipation target value is above a threshold, connecting the energy dissipation device **12** to the gear arrangement **14.**

When the energy dissipation target value is above threshold indicating a need for energy to be dissipated in the energy dissipation device, the energy dissipation device may be drivingly connected to the gear arrangement.

Further, the method may comprise the following optional actions:
**Action S1':** obtaining or determining a PTO operational tolerance interval, the PTO operational tolerance interval comprising a lower PTO operational limit and an upper PTO operational limit.
**Action S3':** controlling the electrical motor **13** in dependence of the PTO operational tolerance interval and the energy dissipation target value such that the energy dissipated in the energy dissipation device **12** and the PTO **11** is controlled at least towards the energy dissipation target value, while the PTO is held within the PTO operational tolerance interval.

By allowing the PTO **11** to be operated in the PTO operational tolerance interval, the control of the electrical motor **13** and thus the energy dissipation device **12** may be more flexible and thus be controlled closer towards the energy dissipation target value.

Still further, the method may comprise the following optional actions:
**Action S1":** obtaining an indication that the PTO **11** can be driven intermittently.
**Action S3":** during intermittent time periods, controlling the PTO **11** to be disconnected from the gear arrangement **14** and controlling the electrical motor **13** based on the energy dissipation target value.

Hence, when it is determined by a user or by the control device **100** or another control system of the vehicle 1 that the PTO can be turned off intermittently, the PTO **11** can be disconnected from the gear arrangement and the energy dissipation device **12** can be controlled without consideration of the PTO to or at least towards the energy dissipation target value.

The method may also comprise an optional action **S5:**
**Action S5:** controlling the regulator **17** based on the energy dissipation target value. As described above, the regulator **17** may be a means further regulating the quantity of energy dissipated in the energy dissipation device **12.** For example, if the energy dissipation device is an air compressor, the amount of energy dissipated may be controlled by an orifice diameter control means or a throttle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the present disclosure are presented as a list of numbered Examples.

Example 1: An energy dissipation system (10) for an electrically driven vehicle (1), the system (10) comprising a mechanical power takeoff (11) , PTO, an energy dissipation device (12), an electrical motor (13) and a gear arrangement (14), wherein both the mechanical PTO (11) and the energy dissipation device (12) are configured to be driven by the electrical motor (13) via the gear arrangement (14).

Example 2: The system (10) according to example 1, wherein the gear arrangement has an input shaft (20) connected to the electrical motor, a first output shaft (21) drivingly connected or connectable to the PTO (11) and a second output shaft (22) drivingly connected or connectable to the energy dissipation device (12).

Example 3: The system (10) according to example 2, wherein the PTO and/or the energy dissipation device are selectively connectable to the respective output shafts of the gear arrangement using respective clutches (23, 24).

Example 4: The system (10) of any of examples 2-3, wherein a first gear ratio defined as a ratio between the rotational speed of the first output shaft (21) and the rotational speed of the input shaft (20) is smaller than a second gear ratio defined as a ratio between the rotational speed of second output shaft (22) and the rotational speed of the input shaft (20).

Example 5: The system (10) of any of the preceding examples further comprising a control device (100), the control device (100) being configured to:
- obtain a PTO operational target value indicating a desired PTO operating point;
- obtain an energy dissipation target value indicating a desired amount of energy to be dissipated, wherein the energy to be dissipated is at least a portion of an excess energy of the vehicle (1); and
- control the electrical motor (13) in dependence of the PTO operational target value;
- and, if the energy dissipation target value is above a threshold, connect the energy dissipation device (12) to the gear arrangement (14).

Example 6: The system (10) of example 5, wherein the control device (100) is further configured to:
- obtain or determine a PTO operational tolerance interval, the PTO operational tolerance interval comprising a lower PTO operational limit and an upper PTO operational limit; and
- control the electrical motor (13) in dependence of the PTO operational tolerance interval and the energy dissipation target value such that the energy dissipated in the energy dissipation device (12) and the PTO (11) is controlled at least towards the energy dissipation target value, while the PTO is held within the PTO operational tolerance interval.

Example 7: The system (10) of any of examples 5-6, wherein the energy dissipation device (12) comprises a regulator (17) for further adjusting the energy dissipated in the energy dissipation device (12), wherein the control device (100) is further configured to:
- control the regulator (17) based on the energy dissipation target value.

Example 8: The system (10) of any of examples 5-7, wherein the control device (100) is further configured to:
- obtain an indication that the PTO (11) can be driven intermittently;
- during intermittent time periods, control the PTO (11) to be disconnected from the gear arrangement (14) and control the electrical motor (13) based on the energy dissipation target value.

Example 9: The system (10) of any of examples 5-8, wherein the control device (100) is further configured to:
- obtain an indication to turn off the PTO (11);
- control the PTO to be disconnected from the gear arrangement (14) and control the electrical motor (13) based on the energy dissipation target value.

Example10: The system (10) of any of examples 5-9, wherein the control device (100) is further configured
to control an energy storage (15) to provide at least a fraction of the energy required to drive the electrical motor (13) and/or
to control the energy storage (15) to be charged by at least a fraction of the excess energy.

Example 11: The system (10) of any of examples 1-10, wherein the energy dissipation device (12) is a fluid compressor.

Example 12: The system (10) of example 11, when dependent on example 7, wherein the regulator (17) is a throttle or an orifice diameter regulator of the fluid compressor, adapted to restrict the fluid flow rate through the compressor.

Example 13: A method for controlling an energy dissipation system (10) according to any of examples 1-4 performed by a control device (100), the method comprising:
- obtaining (S1) a PTO operational target value indicating a desired PTO operating point;
- obtaining (S2) an energy dissipation target value indicating a desired amount of energy to be dissipated, wherein the energy to be dissipated is at least a portion of an excess energy of the vehicle (1); and
- controlling (S3) the electrical motor (13) in dependence of the PTO operational target value;
- and, if the energy dissipation target value is above a threshold, connecting (S4) the energy dissipation device (12) to the gear arrangement (14).

Example 14: The method of example 13, further comprising:
- obtaining or determining (S1') a PTO operational tolerance interval, the PTO operational tolerance interval comprising a lower PTO operational limit and an upper PTO operational limit; and
- controlling (S3') the electrical motor (13) in dependence of the PTO operational tolerance interval and the energy dissipation target value such that the energy dissipated in the energy dissipation device (12) and the PTO (11) is controlled at least towards the energy dissipation target value, while the PTO is held within the PTO operational tolerance interval.

Example 15: The method of any of examples 13-14, in which the energy dissipation device (12) comprises a regulator (17) for further adjusting the energy dissipated in the energy dissipation device (12), the method further comprising:
- controlling (S5) the regulator (17) based on the energy dissipation target value.

Example 16: The method of any of examples 13-15, further comprising:
- obtaining (S1") an indication that the PTO (11) can be driven intermittently;
- during intermittent time periods, controlling (S3'') the PTO (11) to be disconnected from the gear arrangement (14) and controlling the electrical motor (13) based on the energy dissipation target value.

Example 17: The method of any of examples 13-16, further comprising:
- obtaining a request to turn off the PTO (11);
- controlling the PTO (11) to be disconnected from the gear arrangement (14) and controlling the electrical motor (13) based on the energy dissipation target value.

Example 18: The method of any of examples 13-17, further comprising:
- controlling an energy storage to provide at least a fraction of the energy required to drive the electrical motor (13) and/or
- controlling the energy storage (15) to be charged by at least a fraction of the excess energy.

Example 19: The method of any of examples 13-18, wherein the energy dissipation device (12) is a fluid compressor.

Example 20: The method of example 19, when dependent on example 15, wherein the regulator (17) is a throttle or an orifice diameter regulator of the fluid compressor, adapted to restrict the fluid flow rate through the compressor.

Example 21: A vehicle comprising the energy dissipation system (10) of any of examples 1-12.

Example 22: A computer program product comprising program code for performing, when executed by the processing circuitry, the method of any of examples 13-20.

Example 23: A non-transitory computer-readable storage medium comprising instructions, which when executed by the processing circuitry, causes the processing circuitry to perform the method of any of examples 13-20.

## Claims

1. An energy dissipation system (10) for an electrically driven vehicle (1), the system (10) comprising a mechanical power takeoff (11) , PTO, an energy dissipation device (12), an electrical motor (13) and a gear arrangement (14), wherein both the mechanical PTO (11) and the energy dissipation device (12) are configured to be driven by the electrical motor (13) via the gear arrangement (14).

2. The system (10) according to claim 1, wherein the gear arrangement has an input shaft (20) connected to the electrical motor, a first output shaft (21) drivingly connected or connectable to the PTO (11) and a second output shaft (22) drivingly connected or connectable to the energy dissipation device (12).

3. The system (10) according to claim 2, wherein the PTO and/or the energy dissipation device are selectively connectable to the respective output shafts of the gear arrangement using respective clutches (23, 24).

4. The system (10) of any of claims 2-3, wherein a first gear ratio defined as a ratio between the rotational speed of the first output shaft (21) and the rotational speed of the input shaft (20) is smaller than a second gear ratio defined as a ratio between the rotational speed of second output shaft (22) and the rotational speed of the input shaft (20).

5. The system (10) of any of the preceding claims further comprising a control device (100), the control device (100) being configured to:
- obtain a PTO operational target value indicating a desired PTO operating point;
- obtain an energy dissipation target value indicating a desired amount of energy to be dissipated, wherein the energy to be dissipated is at least a portion of an excess energy of the vehicle (1); and
- control the electrical motor (13) in dependence of the PTO operational target value;
- and, if the energy dissipation target value is above a threshold, connect the energy dissipation device (12) to the gear arrangement (14).

6. The system (10) of claim 5, wherein the control device (100) is further configured to:
- obtain or determine a PTO operational tolerance interval, the PTO operational tolerance interval comprising a lower PTO operational limit and an upper PTO operational limit; and
- control the electrical motor (13) in dependence of the PTO operational tolerance interval and the energy dissipation target value such that the energy dissipated in the energy dissipation device (12) and the PTO (11) is controlled at least towards the energy dissipation target value, while the PTO is held within the PTO operational tolerance interval.

7. The system (10) of any of claims 5-6, wherein the energy dissipation device (12) comprises a regulator (17) for further adjusting the energy dissipated in the energy dissipation device (12), wherein the control device (100) is further configured to:
- control the regulator (17) based on the energy dissipation target value.

8. The system (10) of any of claims 5-7, wherein the control device (100) is further configured to:
- obtain an indication that the PTO (11) can be driven intermittently;
- during intermittent time periods, control the PTO (11) to be disconnected from the gear arrangement (14) and control the electrical motor (13) based on the energy dissipation target value.

9. The system (10) of any of claims 5-8, wherein the control device (100) is further configured to:
- obtain an indication to turn off the PTO (11);
- control the PTO to be disconnected from the gear arrangement (14) and control the electrical motor (13) based on the energy dissipation target value.

10. The system (10) of any of claims 5-9, wherein the control device (100) is further configured
to control an energy storage system (15) to provide at least a fraction of the energy required to drive the electrical motor (13); and/or
to control the energy storage system (15) to be charged by at least a fraction of said excess energy.

11. The system (10) of any of claims 1-10, wherein the energy dissipation device (12) is a fluid compressor,
wherein the regulator (17) is a throttle or an orifice diameter regulator of the fluid compressor, adapted to restrict the fluid flow rate through the compressor.

12. A method for controlling an energy dissipation system (10) according to any of claims 1-4 performed by a control device (100), the method comprising:
- obtaining (S1) a PTO operation target value indicating a desired PTO operating point;
- obtaining (S2) an energy dissipation target value indicating a desired amount of energy to be dissipated, wherein the energy to be dissipated is at least a portion of an excess energy of the vehicle (1); and
- controlling (S3) the electrical motor (13) in dependence of the PTO operational target value;
- and, if the energy dissipation target value is above a threshold, connecting (S4) the energy dissipation device (12) to the gear arrangement (14).

13. A vehicle comprising the energy dissipation system (10) of any of claims 1-11.

14. A computer program product comprising program code for performing, when executed by the processing circuitry, the method of claim 12.

15. A non-transitory computer-readable storage medium comprising instructions, which when executed by the processing circuitry, causes the processing circuitry to perform the method of claim 12.
